# EUROPEAN PATENT SPECIFICATION

(11) **EP 3 022 891 B1**
(45) Date of publication and mention of the grant of the patent: **15.08.2018**
(21) Application number: 14827040.8
(22) Date of filing: 17.06.2014
(51) Int. Cl.: H04M 1/00, H04L 29/06, H04W 4/06, H04W 4/12, H04W 4/16, H04M 1/725, H04W 4/02

(54) **TELEPHONE NETWORK SYSTEM AND METHOD**
TELEFONNETZSYSTEM UND VERFAHREN
SYSTÈME ET PROCÉDÉ POUR UN RÉSEAU TÉLÉPHONIQUE

(30) Priority: 17.07.2013 US 201313944853
(43) Date of publication of application: 25.05.2016
(73) Proprietor: Flypsi, Inc., Boston MA 02116 (US)
(72) Inventor: ZHIDOV, Ivan, Chickasa, OK 73018 (US); RINFRET, Peter A., Nantucket, MA 02554 (US); KOCHHAR, Sunir, Oro Valley, AZ 85737 (US)
(74) Representative: Cooley (UK) LLP
(86) International application number: PCT/US2014/042736
(87) International publication number: WO 2015/009383

(56) References cited:
- WO-A2-2004/073288
- US-A1- 2006 140 200
- US-A1- 2009 060 155
- US-A1- 2009 060 155
- US-A1- 2010 130 228

## Description

### FIELD OF THE INVENTION

The present invention relates to systems and methods for setting up and connecting telephone calls, and delivering information related to such telephone calls using an Internet Protocol (IP) or other data channel while delivering the voice portion of the call in accordance with CDMA, GSM or like voice channel delivery standards.

### BACKGROUND OF THE INVENTION

The volume of telephone calls and text messaging has increased dramatically and users are finding it more and more difficult to manage that volume of calls and messages. The current systems to aid in managing some types of calls only provide minimal assistance to the user. It is therefore an advantage of the present invention to provide methods for assisting callers and call recipients with the management of calls and messages.

Additional advantages of various embodiments of the invention are set forth, in part, in the description that follows and, in part, will be apparent to one of ordinary skill in the art from the description and/or from the practice of the invention.

US2016/140200 discloses mechanisms and methods for facilitating dynamic integration of disparate database architectures for efficient management of resources in an on-demand services environment in a multi-tenant environment.

### SUMMARY OF THE INVENTION

In accordance with one aspect of the invention, there is provided a method of providing telephone service as defined by claim 1. Optional features are defined by the dependent claims.

### BRIEF DESCRIPTION OF THE DRAWINGS

In order to assist the understanding of this invention, reference will now be made to the appended drawings, in which like reference characters refer to like elements.
FIG. 1 is a schematic diagram illustrating a network architecture that may be used to provide telephone service in accordance with embodiments of the present invention.
FIG. 2 is a block diagram illustrating a method of providing telephone calls in accordance with embodiments of the present invention.
FIG. 3 is a block diagram illustrating data channel and voice channel connections used to provide telephone service in accordance with embodiments of the present invention.
FIG. 4 is a block diagram illustrating a method of setting up and connecting an incoming call in accordance with one embodiment of the present invention.
FIG. 5 is a block diagram illustrating a method of setting up and connecting an outgoing call in accordance with one embodiment of the present invention.
FIG. 6 is a call sequence diagram illustrating a method of setting up and connecting a conference call in accordance with one embodiment of the present invention.

### DETAILED DESCRIPTION OF EMBODIMENTS OF THE INVENTION

Reference will now be made in detail to embodiments of the present invention, examples of which are illustrated in the accompanying drawings. It is to be understood that other embodiments may be utilized and structural changes may be made without departing from the scope of the present invention.

It should be noted that in connection with the described embodiments, reference is made to a data channel. A preferred data channel may be an Internet Protocol (IP) channel, which is not a conventional telephone voice channel. However, other data, non-conventional voice, channels over which information may be transmitted between a telephone handset and a server may be used in alternative embodiments of the invention.

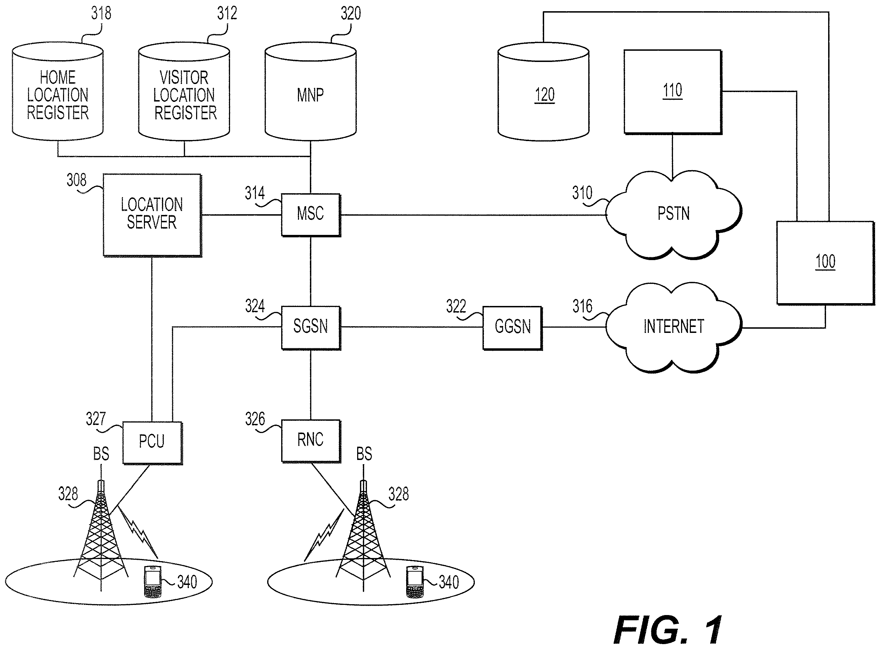

With reference to Fig. 1, embodiments of the present invention may be implemented using a system having a server 100, associated computer memory, such as a database 120, and an associated telecommunications switch 110 which communicate through a network with a telephone handset 340. The server 100 may be connected to the database 120 and the switch 110. The server 100 may also be connected via the Internet 316 through one or more nodes, such as a Gateway GPRS Support Node (GGSN) 322 and a Servicing GPRS Support Node (SGSN) 324, to a mobile network 313. The switch 110 may be connected through the PSTN 310 to the mobile network 313 at a Mobile Switching Center (MSC) 314. In turn, the MSC 314 may be connected to a Home Location Register database (HLR) 318, a Visitor Location Register database (312), a Mobile Number Portability database (MNP) 320, a location server 308, and the SGSN 324. The SGSN 324 may be connected to one or more Radio Network Controllers (RNC) 326 and/or one or more Processor Control Units (PCU) 327, which in turn may be connected to one or more Base Stations (BS) 328 and to one or more mobile devices referred to collectively as "handsets" 340.

The communications between the server 100 and the handset 340 over the Internet 316 may utilize IP as a protocol opposed to protocols used to establish communications according to CDMA, GSM, or like standards. Such IP governed communications are referred to herein as being conducted over a "data channel." Conversely, communications between the switch 110 and the handset over the PSTN 310 may be transmitted and received in accordance with CDMA, GSM or like standards as opposed to using IP. Such CDMA, GSM or like governed communications, when used to carry voice information, are referred to herein as being conducted over a "voice channel."

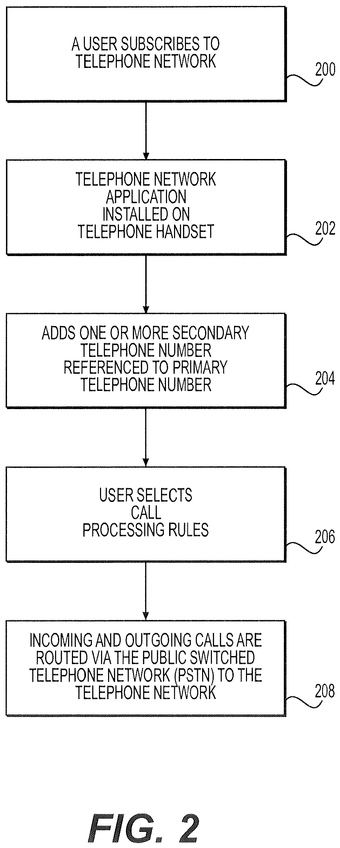

With reference to Figs. 1 and 2, method embodiments of the invention may be facilitated starting with step 200 in which a handset 340 may be used to subscribe to the telephone network that includes the server 100 and switch 110 used to provide telephone service in accordance with embodiments of the invention. A user may subscribe to the telephone network in step 200 by enrolling the telephone handset 340 using a data channel connection between the handset and the server 100. Responsive to a data channel request received from the handset 340, a handset application may be transmitted to the handset from the server 100, and installed and stored in memory associated with the handset in step 202. Once the handset application is installed on the handset 340, the handset may connect to the server 100 by operation of the handset application as needed over a data channel connection which may include the BS 328, RNC 326 or PCU 327, SGSN 324, GGSN 322, and Internet 316.

In connection with step 204, the server 100 may transmit information to the handset 340 via the data channel, which, through automatic operation of the handset application, permits the user to select one or more secondary telephone numbers to be referenced to a primary telephone number for the handset. The primary telephone number, preferably, may be a SIM number or ESN which is assigned to the handset 340 at the time of activation. Once selected, the handset 340 may automatically transmit information which to the server 100 over the data channel which requests that the secondary telephone numbers be associated with the primary telephone number. In response, the server 100 may store (i.e., reference) information indicating the association of the one or more selected secondary telephone numbers in computer memory associated with the server such as the database 120. In an alternative embodiment, the server 100 may automatically assign one or more secondary telephone numbers to the handset 340, as opposed to them being selected.

In step 206 of Fig. 2, the handset 340 may be used to access the handset application installed thereon to select call processing rules for handling incoming and outgoing voice channel calls to and from the handset 340. Information indicating call processing rules may be transmitted from the handset 340 to the server 100 via the data channel by automatic operation of the handset application. Custom call processing rules may be selected for, and associated with, each of the primary telephone number and the one or more secondary telephone numbers associated with the primary telephone number. The call processing rules information may be automatically stored in a computer memory, such as database 120, by the server 100. An indication of the association of particular call processing rules with a particular handset 340 and particular primary and/or secondary telephone numbers may also be stored in the database 120. The call processing rules may include preset responses for incoming calls, such as custom stored voice message(s) and/or custom stored text message(s) to be associated with the primary and/or one or more secondary telephone numbers. The call processing rules may further permit the handset 340 to be used to control the availability of the secondary telephone numbers as well as activation of additional secondary telephone numbers and deactivation of existing secondary telephone numbers. Information indicating the call processing rules for the primary telephone number and secondary telephone numbers may be stored automatically in memory associated with the handset 340. The call processing rules may further include stock rules used for all telephone numbers, such as an option to accept or not accept (i.e., drop) an incoming call. With reference to step 208, the application stored on the handset 340 may enable it to be used to receive incoming calls from, and place outgoing calls to, a recipient telephone (not shown) which is connected to the PSTN 310, as explained in more detail below.

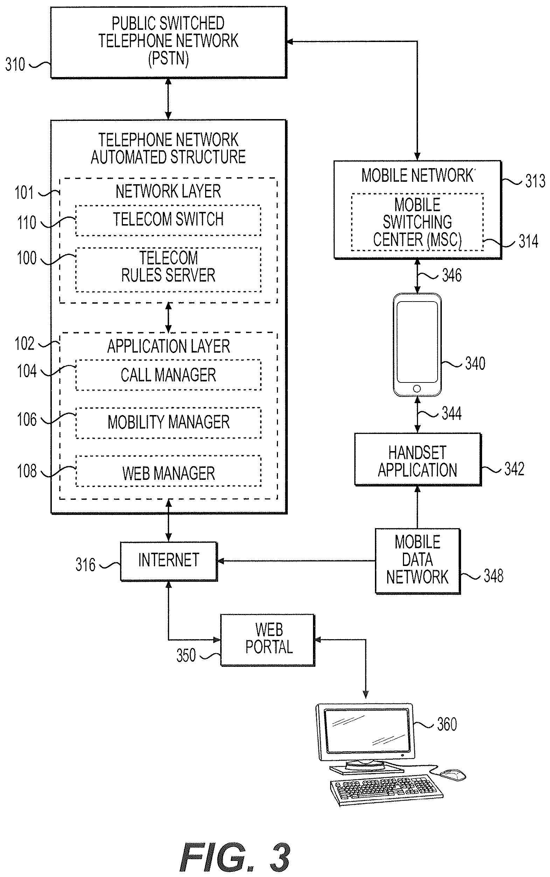

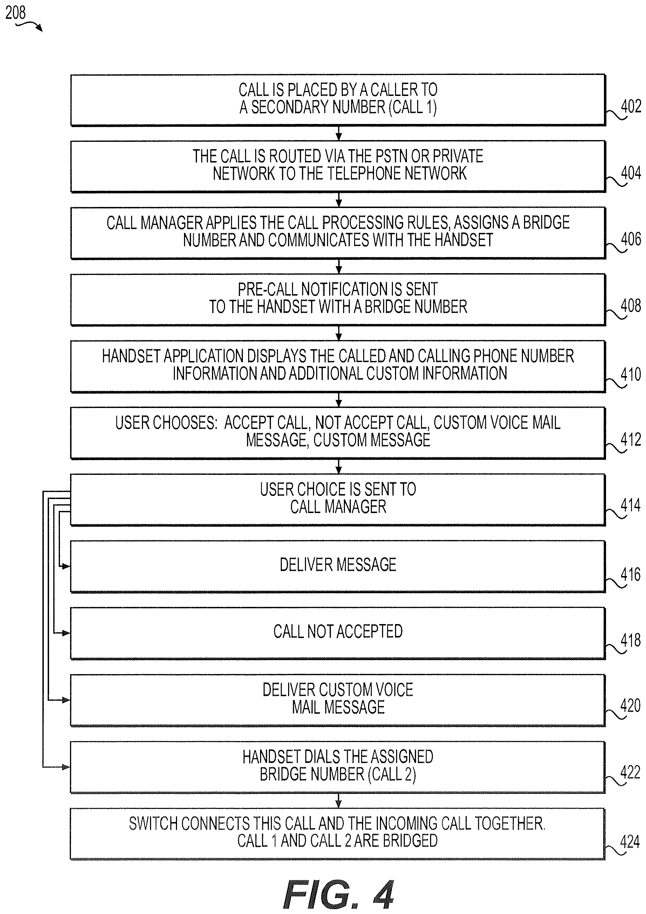

With reference to Figs. 3 and 4, the handset 340 may be used to receive incoming (terminating) calls to a secondary telephone number, using a telephone network automated structure having a network layer 101 and an application layer 102 associated therewith. An incoming call to the secondary telephone number may be placed in step 402 by a calling party. The incoming call is routed from the caller's telephone to the PSTN 310. In step 404, the incoming call may be routed over the PSTN 310 to the the switch 110. Responsive to receipt of the incoming call at the switch 110, a Call Manager 104 application, which cooperates with a Mobility Manager 106 application, and a Web Manager 108 application, which are all associated with the server 100, may access the call processing rules in the database 120 which are associated with the secondary telephone number that is being called. Subject to the accessed call processing rules, the Call Manager 104 may assign or look up a bridge telephone number to be used for completion of the call in step 406. The bridge telephone number may be associated with the switch 110, and calls to the bridge telephone number may be automatically routed to this switch.

The call processing rules may provide for call routing via a call distribution algorithm where the call could be routed to one or many telephone numbers. The call processing rules may be user selectable and configurable, and may apply to voice, text and/or other data messaging. The call processing rules may govern how calls are handled and may provide automated call routing or call dropping based on location data of the calling and/or called party. The call processing rules may further govern handling calls based on incoming caller ID, which may identify a calling party as being on an accepted caller ID list or a non-accepted caller ID list. The call processing rules may further provide call routing based on weekday, weekend, holiday, time of day, biometrics data, and accelerometer data information. The call processing rules may still further provide call routing based on an interface with a handset 340 calendar to check availability to accept calls. Such calendars may include, for example, Outlook, Google Calendar, and other user calendars.

If the call processing rules indicate that the secondary telephone number is not available to this particular caller, or to all callers, however, the Call Manager 104 may apply such rule or rules and reject the incoming call at the conclusion of step 406. Application of the call processing rules for a call rejection may result in the call simply not being answered, being dropped, or automated return of a voice, text, or other type of message to the calling telephone number or a communication device associated therewith.

On the other hand, if the call processing rules permit completion of the call, in step 408 the Call Manager 104 may transmit pre-call notification information to the handset 340, which includes the assigned/looked up bridge telephone number, via the data channel connection, i.e., over the Internet 316 and the Mobile Data Network 348. The pre-call information may include information used by the application installed on the handset 340 to cause a display of the calling telephone number, the calling party name, calling party location, such as GPS location, and/or the called secondary telephone number, as well as other information in step 410. The incoming pre-call information may be received at the handset 340 before or during the call ringing on the handset.

In step 412, responsive to receipt of the incoming pre-call notification information, the handset application may cause the handset 340 to display call handling choices for the call. For example, the handset 340 may be directed under the control of the handset application to display receive call, drop call, custom voice mail message, and/or custom text message choices. The choices may be selected through interaction with the handset 340, all before the call is connected or dropped. In step 414, the selection of either delivering a responsive text message (416), not accepting, i.e., "dropping" the call (418), or responding to the call with a custom voice message (420) may be transmitted from the handset 340 to the server 100 via the data channel. Thereafter, the Call Manager 104 may automatically implement the drop call or respond with text or voice message instructions received over the data channel, and the call attempt may be terminated thereafter.

If the call is accepted in step 414, however, the handset application may automatically cause the handset 340 to call the bridge telephone number in step 422 over a voice channel. The return call from the handset 340 to the bridge telephone number may be routed over the PSTN 310 to the switch 110 using a voice channel connection. In step 424, once the call to the bridge telephone number is received at the switch 110, the switch may "bridge" the incoming voice channel call to the bridge telephone number with the incoming voice channel call to the secondary telephone number to thereby connect the incoming call from the calling party to the handset 340 via a voice channel. Further, the switch 110 may automatically send signaling information to the calling party telephone which causes the secondary telephone number to be displayed as the number to which the call has been completed.

With continued reference to Fig. 3, the web manager 108 may be used to process Internet 316 transactions for the server 110. The system may also employ a web portal 350 to link a digital device 360 other than a handheld 340 to the telecommunications system for calling in accordance with embodiments of the invention. For example, embodiments of the invention may be used with digital devices 360 such as a desktop computer, laptop computer, IPad, tablet, IPod 790, or the like.

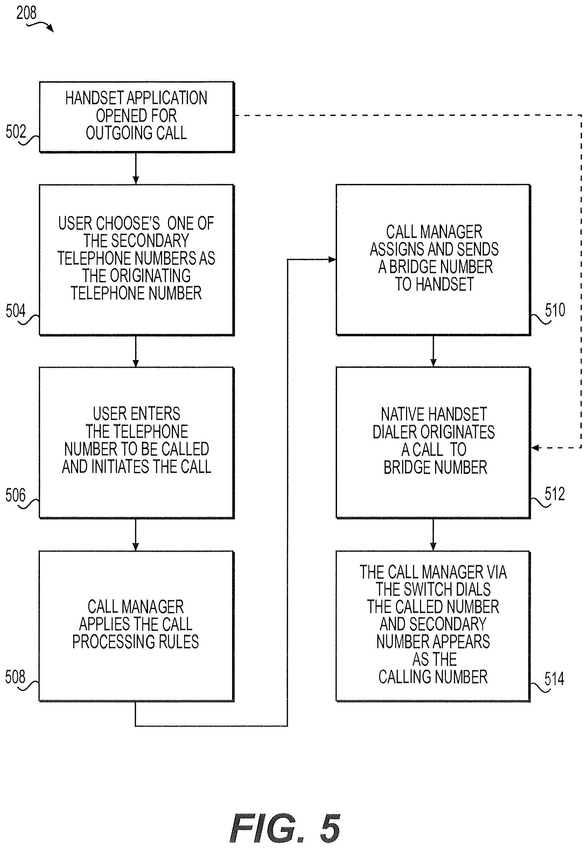

With reference to Figs. 3 and 5, the handset 340 may be used to place outgoing (originating) calls from a secondary telephone number, using the telephone network automated structure shown in Fig. 3 and described above. If the party to be called has not yet been called using a secondary telephone number, an outgoing call from the handset 340 may be initiated to such party in step 502 by opening the handset application installed thereon. Once the handset application is open, the handset 340 may be used to choose a secondary telephone number as the originating telephone number in step 504. A list of such secondary telephone numbers may be stored in memory associated with the handset.

In step 506, the handset 340 may be used to enter, or select from an address file, a contact telephone number to be called in order to initiate a call to such telephone number. The handset application may cause the handset 340 to transmit information to the server 100 Call Manager 104 via the data channel automatically as a result of the selection of the secondary telephone number and the contact telephone number. The transmitted information may indicate the secondary telephone number from which the call is to appear to the called party to have been placed, and the contact telephone number to be called.

In step 508, responsive to receipt of the data channel communication from the handset 340 requesting set up of a call from it to the telephone number to be called, the Call Manager 104 may access the call processing rules in the database 120 which are associated with the secondary telephone number from which the call is to appear to have been placed. In step 510, subject to the accessed call processing rules, the Call Manager 104 may assign a bridge telephone number to be used to connect the call from the handset 340 to the switch 110 and send pre-call information including the bridge telephone number to the handset via the data channel.

The bridge telephone number may be associated with the switch 110, and calls to the bridge telephone number may be automatically routed to this switch. Once the bridge telephone number is assigned, the server 100 under the control of the Call Manager 104, may store information in the database 120 which associates the bridge telephone number with the primary telephone number for the handset 340, the secondary telephone number selected for the call, and the contact telephone number to be called. More specifically, the stored information may indicate that each combination of primary telephone number and bridge telephone number are uniquely associated with each combination of secondary telephone number and contact telephone number. In other words, each combination of primary telephone number and bridge telephone number for the handset 340 map to a unique combination of secondary telephone number and contact telephone number in the database 120 memory.

In step 512, responsive to receipt of the bridge telephone number information over the data channel, the handset application may cause the handset 340 to automatically call the bridge telephone number via a voice channel. The return call from the handset 340 to the bridge telephone number may be routed over the PSTN 310 to the switch 110 using a voice channel connection.

In step 514, the Call Manager 104 may instruct the switch 110 to place a voice channel call to the telephone number to be called using the secondary telephone number as the originating telephone number from the switch. Once the call to the bridge telephone number from the handset 340 is received at the switch 110, the switch may "bridge" the incoming voice channel call to the bridge telephone number with the outgoing voice channel call from the secondary telephone number to the contact telephone number to thereby connect the outgoing call from the handset 340 to the party being called via a voice channel. Further, the switch 110 may automatically send signaling information to the called party telephone which causes the secondary telephone number to be displayed as the number from which the call appears to have been placed. Because each pairing of a primary telephone number and a bridge telephone number maps to a unique contact telephone number and secondary telephone number pairing, the call can be completed at the switch 110 to the correct contact telephone number while showing the desired secondary telephone number as the originating number.

With continued reference to Fig. 5, in the event that the contact telephone has been previously called using the secondary telephone number on the handset 340, the user may directly select the bridge telephone number associated with the secondary telephone number and contact telephone number in step 506 either using the handset application in step 502, or without opening the handset application in step 512. Alternatively, the handset may have a stored "shortcut" which, when the user selects the contact telephone number to be called from the secondary telephone number, results in the associated bridge telephone number being dialed. In either case, the handset 340 may dial the bridge telephone number to connect with the Call Manager 104 in step 512. In step 514, the Call Manager 104 may look up the secondary telephone number and the contact telephone number associated with the paired bridge telephone number and primary telephone number for the handset 340. Thereafter, the switch 110 may dial the contact telephone number and bridge the call from the handset 340 in a manner that makes the secondary telephone number appear to be the telephone number from which the call is being placed.

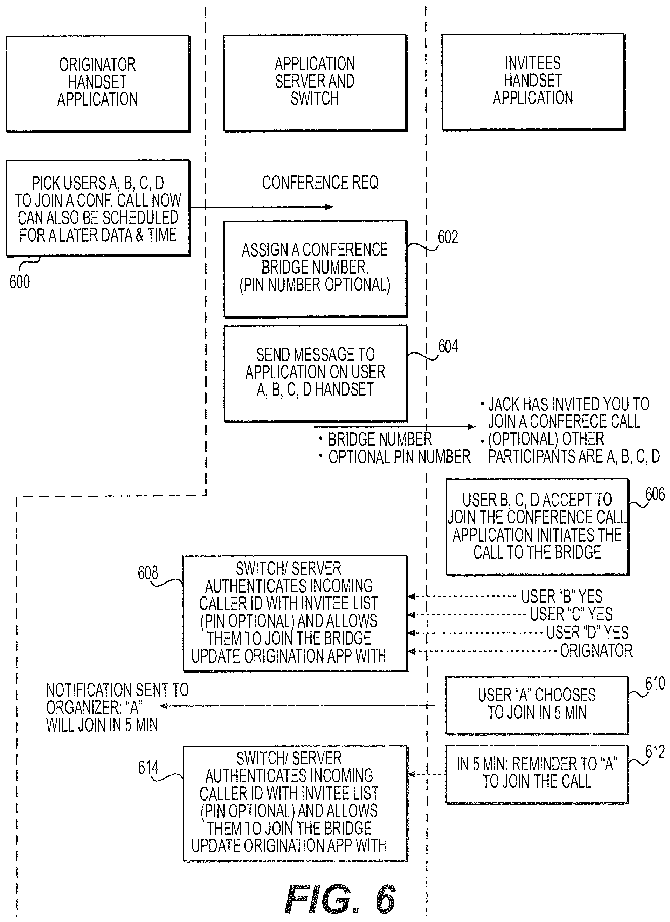

Fig. 6 is a call flow diagram illustrating a method of setting up and connecting a multi-party conference call in accordance with an embodiment of the present invention. With reference to Figs. 3 and 6, the communication sequence for a conference call is illustrated between the handset application stored on the handset 340, the Call Manager 104 application associated with the server 100 and switch 110, and a conference call invitee handset. In step 600, the application on the handset 340 may be used to select invitees (users) for a conference call. The telephone numbers of the invitees may be selected from an address book or manually entered. Further, the conference call may be selected to be initiated immediately, or at some future date and time.

Once the invitees are selected, the handset 340 may be instructed by the handset application to transmit a conference request to the server 100 via a data channel. In step 602, the Call Manager 104 operating on the server 100 may assign a conference bridge telephone number to the conference call in response to receipt of the conference request. In step 604, the Call Manager 104 may cause the server 100 to send conference invitation messages to each of the invitee handsets, and more specifically, applications stored on the invitee handsets, via a data channel. The invitation messages may include the assigned bridge telephone number for the conference call and an optional PIN or code number for the conference call. The invitation message may provide a notice, for example, "Jack has invited you to join a conference call," and further include identification of other invited participants.

In step 606, each invitee handset may be used to accept to join the conference call, join at a later time, or decline to join. If the acceptance is for a future scheduled conference call, an indication of the acceptance (including acceptance to join late) may be transmitted from each invitee handset under the control of the application installed thereon, to the server 100 Call Manager 104 via the data channel. Further, if the invitation is declined altogether, an indication thereof may be transmitted from each invitee handset to the server 100. Thereafter, the Call Manager 104 may transmit information to the originating handset 340, and optionally the invitee handsets, via the data channel, which indicates acceptance of a future conference call, acceptance to join late (step 610), or declination of the conference call invitation.

If the conference call invitation is accepted and it is time for the call, each accepting invitee handset may automatically or manually dial the bridge telephone number using a voice channel. The switch 110 may receive the voice channel calls to the bridge telephone number and may authenticate the invitees right to join the conference call in step 608 by comparing the invitee's telephone number with that of the invitee list, as well as comparing any PIN input by the invitee with the PIN selected for the conference call. If the authentication is successful, the invitee handset is connected to the call via the voice channel. An automatic update may be transmitted via the data channel from the server to the originating handset 340 indicating that a particular invitee handset has joined the conference call.

If an invitee chose to join late, the server 100 may automatically transmit a reminder to the affected invitee handset to join the call at the agreed time in step 612. Thereafter, the late joining invitee handset may dial the bridge telephone number automatically or manually using a voice channel. The switch 110 may receive the voice channel call to the bridge telephone number, authenticate the late joining invitee handset, and connect the handset to the conference call in step 614.

The foregoing has described the principles, embodiments and modes of operation of the present invention. However, the invention should not be construed as being limited to the particular embodiments discussed. The above described embodiments should be regarded as illustrative rather than restrictive, and it should be appreciated that variations may be made in those embodiments by workers skilled in the art without departing from the scope of the present invention as defined by the following claims.

## Claims

1. A method of providing telephone service, the method comprising:
associating in a database (120) coupled to a server (100), a secondary telephone number with a primary telephone number assigned to a telephone handset (340);
receiving, at the server (100) from the telephone handset (340) via a data channel, first digital information indicating primary call processing rules for handling calls to the primary telephone number;
storing the primary call processing rules digitally in the database (120) coupled to the server (100);
receiving, at the server (100) from the telephone handset (340) via the data channel, second digital information indicating secondary call processing rules for handling calls to the secondary telephone number;
storing the secondary call processing rules digitally in the database (120) coupled to the server (100);
accessing, by the server (100) from the database (120), the secondary call processing rules for handling calls to the secondary telephone number, in response to receiving, at a switch (110) coupled to the server (100) and a public switched telephone network (PSTN) (310), an incoming call to the secondary telephone number;
assigning or looking up in the database (120), by the server (100), a first bridge telephone number to be used for completion of the incoming call to the secondary telephone number, wherein the first bridge telephone number is associated with the switch (110) such that calls to the first bridge telephone number are automatically routed to the switch (110);
transmitting, from the server (100) to the telephone handset (340) via the data channel, pre-call information based on the secondary call processing rules, wherein the pre-call information includes the first bridge telephone number;
whereby the pre-call information transmitted from the server (100) to the telephone handset (340) allows the telephone handset (340) to accept the incoming call to the secondary telephone number by calling the first bridge telephone number over a voice channel including the PSTN (310) to connect the incoming call to the telephone handset (340) via the switch (110).

2. The method of claim 1, further comprising:
responsive to the pre-call information, receiving information, at the server (100) from the telephone handset (340) via the data channel, indicative of a user input to the telephone handset regarding call handling choices for the incoming call; and
processing, by the server (100), the incoming call based on the stored secondary call processing rules and the information indicative of the user input to the telephone handset, wherein said processing includes at least one of:
delivering a responsive text message (416);
dropping the incoming call (418); and
responding to the incoming call with a custom voice message (420).

3. The method of claim 1 or claim 2, wherein the pre-call information transmitted from the server (100) to the telephone handset (340) via the data channel includes information to cause a display on the telephone handset (340) of at least one of:
a calling telephone number of the incoming call;
a calling party name;
a calling party location; and
the secondary telephone number.

4. The method of claim 1, further comprising:
receiving, at the server (100) via the data channel, an outgoing call request from the telephone handset (340), said outgoing call request using the secondary telephone number; and
processing, by the server (100), the outgoing call request based on the stored secondary call processing rules.

5. The method of any of claim 1 through claim 4, wherein the data channel is an Internet protocol (IP) channel.

6. The method of any of claim 1 through claim 5, wherein the voice channel is established in accordance with at least one of a CDMA standard, a GSM standard, a 3G standard, a 4G standard and an LTE standard.

7. The method of claim 1, further comprising:
transmitting an application from the server (100) to the telephone handset (340) using the data channel, wherein said application is adapted to:
(a) manage originating calls from, and terminating calls to, the handset using the primary and secondary telephone numbers;
(b) present visually perceptible call processing rules on the handset associated with the primary and secondary telephone numbers; and
(c) manage the transmission of information indicating the selection of call processing rules from the telephone handset to the server over the data channel.

8. The method of claim 2, wherein said processing further includes at least one of playing a prerecorded or dynamically entered voice mail greeting, and sending a preset or custom text message.

9. The method of claim 4, further comprising:
automatically associating, by the server (100), a unique bridge telephone number with each of a plurality of contact telephone numbers in the database (120);
automatically transmitting, by the server (100) to the telephone handset (340) via the data channel, information that indicates the association of the unique bridge telephone number with each of the plurality of contact telephone numbers;
automatically associating, by the server (100), each pairing of the primary telephone number and one unique bridge telephone number with a corresponding pairing of the secondary telephone number and one contact telephone number of the plurality of contact telephone numbers corresponding to the one unique bridge telephone number;
receiving, at the switch (110) associated with the server (100), an outgoing call from the telephone handset (340) to an outgoing bridge telephone number via a voice channel;
receiving, at the server, information from the switch indicating the outgoing call is being made to the outgoing bridge telephone number from the primary telephone number; and
receiving, at the switch, information from the server directing the switch to: (a) connect the outgoing call to a first contact telephone number of the plurality of contact telephone numbers associated with a first pairing of the primary telephone number and the outgoing bridge telephone number, and (b) identify the outgoing call as being made from the secondary telephone number based on a second pairing of the secondary telephone number and the first contact telephone number corresponding to the first pairing of the primary telephone number and the outgoing bridge telephone number.

10. The method of claim 4, wherein:
the outgoing call request using the secondary telephone number, received at the server (100) via the data channel from the telephone handset (340), includes a first contact telephone number to be called by the telephone handset (340); and
processing, by the server (100), the outgoing call request based on the stored secondary call processing rules comprises:
assigning, by the server (100), a second bridge telephone number associated with the switch (110) and the first contact telephone number, such that the combination of the primary telephone number and the second bridge telephone number is uniquely associated with the secondary telephone number and the first contact telephone number; and
storing, by the server (100) in the database (120), information that associates the second bridge telephone number with the primary telephone number, the secondary telephone number, and the first contact telephone number.

11. The method of claim 10, wherein:
the telephone handset (340) is configured to call a plurality of contact telephone numbers including the first contact telephone number; and
the information stored in the database (120) maps a unique combination of the secondary telephone number and one contact telephone number of the plurality of contact telephone numbers to a corresponding combination of the primary telephone number and a unique bridge telephone number.

12. The method of claim 10, further comprising:
sending, by the server (100) to the telephone handset (340) via the data channel, outgoing pre-call information including the second bridge telephone number, whereby the outgoing pre-call information causes the telephone handset (340) to automatically make an incoming voice channel call to the second bridge telephone number, wherein the incoming voice channel call is routed to the switch (110) over a voice channel including the PSTN (310).

13. The method of claim 12, further comprising:
instructing, by the server (100), the switch (110) to place an outgoing voice channel call to the first contact telephone number using the secondary telephone number as an originating number from the switch, whereby the switch bridges the incoming voice channel call to the second bridge telephone number with the outgoing voice channel call from the secondary telephone number to the first contact telephone number.

14. The method of any of claim 9 through claim 13, wherein:
the incoming call is from a calling telephone number; and
the first bridge telephone number to be used for completion of the incoming call is associated with the switch (110) and the calling telephone number, such that calls to the first bridge telephone number from the calling telephone number are automatically routed to the switch (110).

## Patentansprüche

1. Verfahren zum Bereitstellen von Telefondiensten, wobei das Verfahren Folgendes beinhaltet:
Assoziieren, in einer mit einem Server (100) gekoppelten Datenbank (120), einer sekundären Telefonnummer mit einer einem Telefon (340) zugeordneten primären Telefonnummer;
Empfangen, am Server (100) vom Telefon (340) über einen Datenkanal, von ersten digitalen Informationen, die primäre Anrufverarbeitungsregeln zum Handhaben von Anrufen an die primäre Telefonnummer anzeigen;
Speichern der primären Anrufverarbeitungsregeln digital in der mit dem Server (100) gekoppelten Datenbank (120);
Empfangen, am Server (100) vom Telefon (340) über den Datenkanal, von zweiten digitalen Informationen, die sekundäre Anrufverarbeitungsregeln zum Handhaben von Anrufen an die sekundäre Telefonnummer anzeigen;
Speichern der sekundären Anrufverarbeitungsregeln digital in der mit dem Server (100) gekoppelten Datenbank (120);
Zugreifen, durch den Server (100) von der Datenbank (120), auf die sekundären Anrufverarbeitungsregeln zum Handhaben von Anrufen an die sekundäre Telefonnummer als Reaktion auf den Empfang, an einem mit dem Server (100) und einem öffentlichen Telefonnetz (PSTN)(310) gekoppelten Switch (110), eines eingehenden Anrufs an die sekundäre Telefonnummer;
Zuordnen oder Nachschlagen in der Datenbank (120), durch den Server (100), einer ersten Brückentelefonnummer zur Verwendung zum Abschließen des eingehenden Anrufs an die sekundäre Telefonnummer, wobei die erste Brückentelefonnummer mit dem Switch (110) assoziiert ist, so dass Anrufe an die erste Brückentelefonnummer automatisch zum Switch (110) geleitet werden;
Übertragen, vom Server (100) zum Telefon (340) über den Datenkanal, von Voranrufinformationen auf der Basis der sekundären Anrufverarbeitungsregeln, wobei die Voranrufinformationen die erste Brückentelefonnummer beinhalten;
wobei die vom Server (100) zum Telefon (340) übertragenen Voranrufinformationen es zulassen, dass das Telefon (340) den eingehenden Anruf an die sekundäre Telefonnummer annimmt, durch Anrufen der ersten Brückentelefonnummer über einen Sprachkanal einschließlich dem PSTN (310), um den eingehenden Anruf mit dem Telefon (340) über den Switch (110) zu verbinden.

2. Verfahren nach Anspruch 1, das ferner Folgendes beinhaltet:
Empfangen, als Reaktion auf die Voranrufinformationen, von Informationen am Server (100) vom Telefon (340) über den Datenkanal, die eine Benutzereingabe in das Telefon in Bezug auf Anrufhandhabungsoptionen für den eingehenden Anruf anzeigen; und
Verarbeiten, durch den Server (100), des eingehenden Anrufs auf der Basis der gespeicherten sekundären Anrufverarbeitungsregeln und der Informationen, die dem Telefon die Benutzereingabe anzeigen, wobei die genannte Verarbeitung wenigstens eines der Folgenden beinhaltet:
Liefern einer Antworttextnachricht (416);
Fallenlassen des eingehenden Anrufs (418); und
Antworten auf den eingehenden Anruf mit einer spezifischen Sprachnachricht (420).

3. Verfahren nach Anspruch 1 oder Anspruch 2, wobei die vom Server (100) zum Telefon (340) über den Datenkanal übertragenen Voranrufsinformationen Informationen beinhalten, um eine Anzeige von wenigstens einem der Folgenden auf dem Telefon (340) zu bewirken:
einer Anruftelefonnummer des eingehenden Anrufs;
einem Namen der anrufenden Partei;
einem Standort der anrufenden Partei; und
der sekundären Telefonnummer.

4. Verfahren nach Anspruch 1, das ferner Folgendes beinhaltet:
Empfangen, am Server (100) über den Datenkanal, einer abgehenden Anrufanforderung vom Telefon (340), wobei die genannte abgehende Anrufanforderung die sekundäre Telefonnummer benutzt; und
Verarbeiten, durch den Server (100), der abgehenden Anrufanforderung auf der Basis der gespeicherten sekundären Anrufverarbeitungsregeln.

5. Verfahren nach einem der Ansprüche 1 bis 4, wobei der Datenkanal ein Internet-Protokoll-(IP)-Kanal ist.

6. Verfahren nach einem der Ansprüche 1 bis 5, wobei der Sprachkanal gemäß wenigstens einem aus einem CDMA-Standard, einem GSM-Standard, einem 3G-Standard, einem 4G-Standard oder einem LTE-Standard eingerichtet wird.

7. Verfahren nach Anspruch 1, das ferner Folgendes beinhaltet:
Übertragen einer Anwendung vom Server (100) zum Telefon (340) über den Datenkanal, wobei die genannte Anwendung ausgelegt ist zum:
(a) Verwalten des Einleitens von Anrufen vom und des Beenden von Anrufen an das Telefon mit den primären und sekundären Telefonnummern;
(b) Präsentieren von visuell wahrnehmbaren Anrufverarbeitungsregeln auf dem mit den primären und sekundären Telefonnummern assoziierten Telefon; und
(c) Verwalten der Übertragung von die Auswahl von Anrufverarbeitungsregeln anzeigenden Informationen vom Telefon an den Server über den Datenkanal.

8. Verfahren nach Anspruch 2, wobei das genannte Verarbeiten ferner das Wiedergeben einer zuvor aufgezeichneten oder dynamisch eingegebenen Voicemail-Begrüßung und/oder das Senden einer voreingestellten oder spezifischen Textnachricht beinhaltet.

9. Verfahren nach Anspruch 4, das ferner Folgendes beinhaltet:
automatisches Assoziieren, durch den Server (100), einer einmaligen Brückentelefonnummer mit jeder der mehreren Kontakttelefonnummern in der Datenbank (120);
automatisches Übertragen, durch den Server (100), zum Telefon (340) über den Datenkanal, von Informationen, die die Assoziation der einmaligen Brückentelefonnummer mit jeder der mehreren Kontakttelefonnummern anzeigen;
automatisches Assoziieren, durch den Server (100), jeder Paarung von primärer Telefonnummer und einer einmaligen Brückentelefonnummer mit einer entsprechenden Paarung der sekundären Telefonnummer und einer Kontakttelefonnummer der mehreren Kontakttelefonnummern entsprechend der einen einmaligen Brückentelefonnummer;
Empfangen, an dem mit dem Server (100) assoziierten Switch (110), eines abgehenden Anrufs vom Telefon (340) an eine abgehende Brückentelefonnummer über einen Sprachkanal;
Empfangen, am Server, von Informationen vom Switch, die anzeigen, dass der abgehende Anruf an die abgehende Brückentelefonnummer von der primären Telefonnummer erfolgt; und
Empfangen, am Switch, von Informationen vom Server, die den Switch anweisen zum: (a) Verbinden des abgehenden Anrufs mit einer ersten Kontakttelefonnummer der mehreren Kontakttelefonnummern, die mit einer ersten Paarung der primären Telefonnummer und der abgehenden Brückentelefonnummer assoziiert sind, und (b) Identifizieren des abgehenden Anrufs als von der sekundären Telefonnummer getätigt, auf der Basis einer zweiten Paarung der sekundären Telefonnummer und der ersten Kontakttelefonnummer entsprechend der ersten Paarung der primären Telefonnummer und der abgehenden Brückentelefonnummer.

10. Verfahren nach Anspruch 4, wobei:
die abgehende Anrufanforderung anhand der sekundären Telefonnummer, empfangen am Server (100) über den Datenkanal vom Telefon (340), eine vom Telefon (340) anzurufende erste Kontakttelefonnummer beinhaltet; und
Verarbeiten, durch den Server (100), der abgehenden Anrufanforderung auf der Basis der gespeicherten sekundären Anrufverarbeitungsregeln Folgendes beinhaltet:
Zuordnen, durch den Server (100), einer mit dem Switch (110) und der ersten Kontakttelefonnummer assoziierten zweiten Brückentelefonnummer, so dass die Kombination aus primärer Telefonnummer und zweiter Brückentelefonnummer einmalig mit der sekundären Telefonnummer und der ersten Kontakttelefonnummer assoziiert wird; und
Speichern, durch den Server (100) in der Datenbank (120), von Informationen, die die zweite Brückentelefonnummer mit der primären Telefonnummer, der sekundären Telefonnummer und der ersten Kontakttelefonnummer assoziieren.

11. Verfahren nach Anspruch 10, wobei:
das Telefon (340) zum Anrufen von mehreren Kontakttelefonnummern einschließlich der ersten Kontakttelefonnummer konfiguriert ist; und
die in der Datenbank (120) gespeicherten Informationen eine einmalige Kombination der sekundären Telefonnummer und einer Kontakttelefonnummer der mehreren Kontakttelefonnummern auf eine entsprechende Kombination aus der primären Telefonnummer und einer einmaligen Brückentelefonnummer abbilden.

12. Verfahren nach Anspruch 10, das ferner Folgendes beinhaltet:
Senden, durch den Server (100) zum Telefon (340) über den Datenkanal, von abgehenden Voranrufinformationen einschließlich der zweiten Brückentelefonnummer, wobei die abgehenden Voranrufinformationen bewirken, dass das Telefon (340) automatisch einen eingehenden Sprachkanalanruf an die zweite Brückentelefonnummer vornimmt, wobei der eingehende Sprachkanalanruf über einen Sprachkanal einschließlich dem PSTN (310) zum Switch (110) geleitet wird.

13. Verfahren nach Anspruch 12, das ferner Folgendes beinhaltet:
Anweisen, durch den Server (100), des Switch (110) zum Leiten eines abgehenden Sprachkanalanrufs an die erste Kontakttelefonnummer mittels der sekundären Telefonnummer als Ursprungsnummer vom Switch, wobei der Switch den eingehenden Sprachkanalanruf an die zweite Brückentelefonnummer mit dem abgehenden Sprachkanalanruf von der sekundären Telefonnummer an die erste Kontakttelefonnummer überbrückt.

14. Verfahren nach Anspruch 9 bis Anspruch 13, wobei:
der eingehende Anruf von einer anrufenden Telefonnummer ist; und
die zum Abschließen des eingehenden Anrufs zu verwendende erste Brückentelefonnummer mit dem Switch (110) und der anrufenden Telefonnummer assoziiert ist, so dass Anrufe an die erste Brückentelefonnummer von der anrufenden Telefonnummer automatisch zum Switch (110) geleitet werden.

## Revendications

1. Procédé de fourniture de service téléphonique, le procédé comprenant :
l'association, dans une base de données (120) couplée à un serveur (100), d'un numéro de téléphone secondaire à un numéro de téléphone principal attribué à un combiné téléphonique (340) ;
la réception au niveau du serveur (100), venant du combiné téléphonique (340) via un canal de données, d'une première information numérique indiquant des règles de traitement d'appels principaux pour gérer les appels à destination du numéro de téléphone principal ;
le stockage numérique des règles de traitement d'appels principaux dans la base de données (120) couplée au serveur (100) ;
la réception au niveau du serveur (100), venant du combiné téléphonique (340) via le canal de données, d'une deuxième information numérique indiquant des règles de traitement d'appels secondaires pour gérer les appels à destination du numéro de téléphone secondaire ;
le stockage numérique des règles de traitement d'appels secondaires dans la base de données (120) couplée au serveur (100) ;
l'accès par le serveur (100), à partir de la base de données (120), aux règles de traitement d'appels secondaires pour gérer les appels à destination du numéro de téléphone secondaire en réponse à la réception, au niveau d'un commutateur (110) couplé au serveur (100) et à un réseau téléphonique public commuté (PSTN) (310), d'un appel entrant à destination du numéro de téléphone secondaire ;
l'attribution ou la recherche dans la base de données (120), par le serveur (100), d'un premier numéro de téléphone de dérivation à utiliser pour faire aboutir l'appel entrant à destination du numéro de téléphone secondaire, le premier numéro de téléphone de dérivation étant associé au commutateur (110) de telle façon que les appels à destination du premier numéro de téléphone de dérivation sont automatiquement acheminés au commutateur (110) ;
la transmission, du serveur (100) au combiné téléphonique (340) via le canal de données, d'une information de pré-appel basée sur les règles de traitement d'appels secondaires, l'information de pré-appel contenant le premier numéro de téléphone de dérivation ;
dans lequel l'information de pré-appel transmise depuis le serveur (100) au combiné téléphonique (340) permet au combiné téléphonique (340) d'accepter l'appel entrant à destination du numéro de téléphone secondaire en appelant le premier numéro de téléphone de dérivation par le biais d'un canal vocal contenant le réseau PSTN (310) afin de relier l'appel entrant au combiné téléphonique (340) via le commutateur (110).

2. Procédé selon la revendication 1, comprenant en outre :
en réponse à l'information de pré-appel, la réception au niveau du serveur (100), venant du combiné téléphonique (340) via le canal de données, d'une information indiquant une saisie d'utilisateur dans le combiné téléphonique concernant les choix de gestion d'appels pour l'appel entrant ; et
le traitement par le serveur (100) de l'appel entrant sur la base des règles de traitement d'appels secondaires stockées et de l'information indiquant la saisie d'utilisateur dans le combiné téléphonique, ledit traitement comprenant l'un au moins parmi :
la diffusion d'un message de réponse textuel (416) ;
l'abandon de l'appel entrant (418) ; et
la réponse à l'appel entrant avec un message vocal personnalisé (420).

3. Procédé selon la revendication 1 ou la revendication 2, dans lequel l'information de pré-appel transmise du serveur (100) au combiné téléphonique (340) via le canal de données contient une information provoquant l'affichage sur le combiné téléphonique (340) de l'un au moins parmi :
un numéro de téléphone appelant de l'appel entrant ;
un nom d'appelant ;
une localisation d'appelant ; et
le numéro de téléphone secondaire.

4. Procédé selon la revendication 1, comprenant en outre :
la réception au niveau du serveur (100) via le canal de données d'une demande d'appel sortant du combiné téléphonique (340), ladite demande d'appel sortant utilisant le numéro de téléphone secondaire ; et
le traitement par le serveur (100) de la demande d'appel sortant sur la base des règles de traitement d'appels secondaires stockées.

5. Procédé selon l'une quelconque des revendications 1 à 4, dans lequel le canal de données est un canal de protocole Internet (IP).

6. Procédé selon l'une quelconque des revendications 1 à 5, dans lequel le canal vocal est établi conformément à l'une au moins parmi une norme CDMA, une norme GSM, une norme 3G, une norme 4G et une norme LTE.

7. Procédé selon la revendication 1, comprenant en outre :
la transmission d'une application du serveur (100) au combiné téléphonique (340) en utilisant le canal de données, ladite application étant adaptée pour :
(a) gérer les appels en provenance et à destination du combiné en utilisant les numéros de téléphone principal et secondaire ;
(b) présenter visuellement sur le combiné des règles de traitement d'appels visibles associées aux numéros de téléphone principal et secondaire ; et
(c) gérer la transmission d'une information indiquant la sélection de règles de traitement d'appels du combiné téléphonique au serveur par le biais du canal de données.

8. Procédé selon la revendication 2, dans lequel ledit traitement comprend en outre l'un au moins parmi la lecture d'un message d'accueil de boîte vocale préenregistré ou saisi dynamiquement et l'envoi d'un message textuel prédéfini ou personnalisé.

9. Procédé selon la revendication 4, comprenant en outre :
l'association automatique par le serveur (100) d'un numéro de téléphone de dérivation unique à chacun d'une pluralité de numéros de téléphone de contacts dans la base de données (120) ;
la transmission automatique du serveur (100) au combiné téléphonique (340), via le canal de données, d'une information indiquant l'association du numéro de téléphone de dérivation unique à chacun de la pluralité de numéros de téléphone de contacts ;
l'association automatique par le serveur (100) de chaque paire du numéro de téléphone principal et d'un numéro de téléphone de dérivation unique à une paire correspondante du numéro de téléphone secondaire et d'un numéro de téléphone de contact de la pluralité de numéros de téléphone de contacts correspondant au numéro de téléphone de dérivation unique ;
la réception, au niveau du commutateur (110) associé au serveur (100), d'un appel sortant venant du combiné téléphonique (340) à un numéro de téléphone de dérivation sortant via un canal vocal ;
la réception au niveau du serveur d'une information venant du commutateur indiquant que l'appel sortant est passé au numéro de téléphone de dérivation sortant depuis le numéro de téléphone principal ; et
la réception au niveau du commutateur d'une information venant du serveur ordonnant au commutateur : (a) de relier l'appel sortant à un premier numéro de téléphone de contact de la pluralité de numéros de téléphone de contacts associée à une première paire du numéro de téléphone principal et du numéro de téléphone de dérivation sortant, et (b) d'identifier l'appel sortant comme étant passé depuis le numéro de téléphone secondaire sur la base d'une deuxième paire du numéro de téléphone secondaire et du premier numéro de téléphone de contact correspondant à la première paire du numéro de téléphone principal et du numéro de téléphone de dérivation sortant.

10. Procédé selon la revendication 4, dans lequel :
la demande d'appel sortant utilisant le numéro de téléphone secondaire, reçue au niveau du serveur (100) via le canal de données en provenance du combiné téléphonique (340), contient un premier numéro de téléphone de contact à appeler par le combiné téléphonique (340) ; et
le traitement par le serveur (100) de la demande d'appel sortant sur la base des règles de traitement d'appels secondaires stockées comprend :
l'attribution par le serveur (100) d'un deuxième numéro de téléphone de dérivation associé au commutateur (110) et au premier numéro de téléphone de contact tel que la combinaison du numéro de téléphone principal et du deuxième numéro de téléphone de dérivation est associée de manière unique au numéro de téléphone secondaire et au premier numéro de téléphone de contact ; et
le stockage par le serveur (100), dans la base de données (120), d'une information associant le deuxième numéro de téléphone de dérivation au numéro de téléphone principal, au numéro de téléphone secondaire et au premier numéro de téléphone de contact.

11. Procédé selon la revendication 10, dans lequel :
le combiné téléphonique (340) est configuré pour appeler une pluralité de numéros de téléphone de contacts comprenant le premier numéro de téléphone de contact ; et
l'information stockée dans la base de données (120) corrèle une combinaison unique du numéro de téléphone secondaire et d'un numéro de téléphone de contact de la pluralité de numéros de téléphone de contacts avec une combinaison correspondante du numéro de téléphone principal et d'un numéro de téléphone de dérivation unique.

12. Procédé selon la revendication 10, comprenant en outre :
l'envoi du serveur (100) au combiné téléphonique (340), via le canal de données, d'une information de pré-appel sortant contenant le deuxième numéro de téléphone de dérivation, l'information de pré-appel sortant provoquant la passation automatique par le combiné téléphonique (340) d'un appel de canal vocal entrant à destination du deuxième numéro de téléphone de dérivation, l'appel de canal vocal entrant étant acheminé au commutateur (110) par le biais d'un canal vocal contenant le réseau PSTN (310).

13. Procédé selon la revendication 12, comprenant en outre :
l'instruction donnée par le serveur (100) au commutateur (110) de passer un appel de canal vocal sortant à destination du premier numéro de téléphone de contact en utilisant le numéro de téléphone secondaire comme numéro d'origine en provenance du commutateur, le commutateur dérivant l'appel de canal vocal entrant vers le deuxième numéro de téléphone de dérivation avec l'appel de canal vocal sortant venant du numéro de téléphone secondaire à destination du premier numéro de téléphone de contact.

14. Procédé selon l'une quelconque des revendications 9 à 13, dans lequel :
l'appel entrant provient d'un numéro de téléphone appelant ; et
le premier numéro de téléphone de dérivation à utiliser pour faire aboutir l'appel entrant est associé au commutateur (110) et au numéro de téléphone appelant, de sorte que les appels à destination du premier numéro de téléphone de dérivation en provenance du numéro de téléphone appelant sont automatiquement acheminés au commutateur (110).
